# EUROPÄISCHE PATENTSCHRIFT

(11) **EP 2 341 368 B1**
(45) Veröffentlichungstag und Bekanntmachung des Hinweises auf die Patenterteilung: **13.07.2016**
(21) Anmeldenummer: 10015112.5
(22) Anmeldetag: 30.11.2010
(51) Int. Cl.: B60R 21/00, G01S 15/93

(54) **Überflutungserkennungssystem für ein Fahrzeug, Fahrzeug mit einem derartigen Überflutungserkennungssystem, Verwendung eines Parkassistenzsystems als Überflutungserkennungssystem und Verfahren zum Erkennen einer Überflutung eines Fahrzeugs**
Flooding detection system for a vehicle, vehicle with such a flood detection system, use of a parking assistance system as flooding detection system and method for detecting flooding in a vehicle
Système de reconnaissance de submersion pour un véhicule, véhicule doté d'un tel système de reconnaissance de submersion, utilisation d'un système d'assistance au stationnement comme système de reconnaissance de submersion et procédé de reconnaissance d'une submersion d'un véhicule

(30) Priorität: 23.12.2009 DE 102009060190
(43) Veröffentlichungstag der Anmeldung: 06.07.2011
(73) Patentinhaber: Valeo Schalter und Sensoren GmbH, 74321 Bietigheim-Bissingen (DE)
(72) Erfinder: Grüdl, Dietmar, 71679 Asperg (DE); Rostocki, Paul-David, 74177 Bad Friedrichshall (DE)

(56) Entgegenhaltungen:
- EP-A2- 1 410 950
- WO-A2-2009/013606
- DE-A1- 10 100 732
- DE-A1- 19 924 755
- US-A1- 2002 047 780

## Beschreibung

Die Erfindung betrifft ein Überflutungserkennungssystem für ein Fahrzeug mit zumindest einem Ultraschallsensor. Des Weiteren betrifft die Erfindung ein Fahrzeug mit einem derartigen Überflutungserkennungssystem sowie ein Verfahren zum Erkennen einer Überflutung eines Fahrzeugs. Darüber hinaus betrifft die Erfindung auch die Verwendung eines Parkassistenzsystems eines Fahrzeugs als Überflutungserkennungssystem des Fahrzeugs.

Aus der DE 102 34 202 B4 ist ein fahrzeuginternes Überflutungswarnsystem bekannt. Dies ist in einem Fahrzeug installiert, um eine Überflutung festzustellen und nach dem Feststellen der Überflutung ein Alarmsignal abzugeben. Das System umfasst zumindest einen Wasserstandssensor der an einer Unterseite des Kraftfahrzeugs installiert ist und in einem bestimmten Abstand über dem Erdboden angeordnet ist, wobei der mindestens eine Wasserstandssensor dazu vorgesehen ist, eine Ansammlung von Wasser auf dem Erdboden zu erfassen, wenn die Zündung des Kraftfahrzeugs abgeschaltet ist. Darüber hinaus ist dieser zur Aussendung eines Steuersignals ausgebildet, wenn der Abstand zwischen der Oberfläche des auf dem Untergrund angesammelten Wassers und dem entsprechenden Wasserstandssensor einen vorbestimmten Abstandswert unterschreitet. Die Detektion ist also dahingehend vorgesehen, dass der Wasserstandssensor nicht unmittelbar von dem Wasser kontaktiert und umspült ist.

Dieses System ist sehr spezialisiert lediglich auf die Überflutungserkennung ausgerichtet und darüber hinaus nur in bestimmten Situationen zur Erkennung vorgesehen.

Die WO2009/013606 A2 betrifft ein System zur Erkennung einer Überflutung eines Kraftfahrzeug mit Ultraschallsensoren, welche am Front- und Heckbereich des Fahrzeugs angeordnet sind und jeweils Ultraschallwellen in vertikaler Richtung aussenden, um den vertikalen Abstand zwischen dem Fahrzeug und einer Wasseroberfläche zu messen.

Aus der EP 1 410 950 A1 ist ein System zur Erkennung von Störungen bei einer Ultraschalleinparkhilfe bekannt. Dabei werden Sensorwerte wie Eigenfrequenz und Ausschwingzeit des Ultraschallsensors gemessen und mit Normwerten verglichen, um eine Störung des Sensors zu erkennen, z. B. infolge einer Eis- oder Wasserschicht auf dem Sensor. Eine solche Schicht kann durch Regen- oder Spritzwasser verursacht werden

Es ist Aufgabe der vorliegenden Erfindung, ein Überflutungserkennungssystem für ein Fahrzeug, sowie ein Fahrzeug mit einem derartigen System als auch ein Verfahren zum Erkennen einer Überflutung des Fahrzeugs sowie die flexible Verwendung als multifunktionales Assistenzsystem, mit dem bzw bei dem die Überflutung der Sensoren selbst und somit auch des Fahrzeugs sicher erkannt werden kann.

Diese Aufgabe wird durch ein Überflutungserkennungssystem welches die Merkmale nach Anspruch 1 aufweis und ein Fahrzeug, welches die Merkmale nach Anspruch 13 aufweist, gelöst.

Ein erfindungsgemaßes Überflutungserkennungssystem für ein Fahrzeug umfasst zumindest einen Ultraschallsensor welcher zur Erfassung eines Abstands von Objekten in Längsrichtung und/oder Querrichtung des Fahrzeugs ausgebildet ist und in im zumindest teilweise überfluteten Zustand zur Überflutungserkennung ausgebildet ist. Durch eine derartige Ausgestaltung des Systems kann der Sensor multifunktionell eingesetzt werden und detektiert somit auch nicht nach unten zum Boden hin, wie dies im Stand der Technik der Fall Die eingeschränkte Einsetzbarkeit im Stand der Technik ist durch die Erfindung wesentlich verbessert.

Vorzugsweise weist der zumindest eine Ultraschallsensor eine Hauptabstrahlrichtung der ausgesendeten Signale in horizontaler Richtung auf Durch diese spezifische Orientierung und damit auch erforderlichen Anbringung am Fahrzeug kann die Informationsgenerierung des Sensors für seine mehreren spezifischen Funktionen mit noch höherer Präzision erreicht werden.

Darüber hinaus umfasst das Überflutungserkennungssystem eine Steuer- und Auswerteeinheit, welche zur Auswertung der Signale des zumindest einen Ultraschallsensors ausgebildet ist. Dies insbesondere im Hinblick auf die Überflutungserkennung. Die Verläufe der Empfangssignale des Ultraschallsensors sind in unterschiedlichen Medien verschieden und die Steuer- und Auswerteeinheit ist dahingehend ausgebildet, das sie abhängig von einem empfangenen und einem ausgewerteten Signalverlauf erkennt, ob sich die Ultraschallsensoren im Wasser oder in der Luft befinden. Es soll also nicht, wie im Stand der Technik ein nicht von dem Wasser umspülter Sensor lediglich den Abstand zur Oberfläche des Wasser detektieren, sondern das erfindungsgemäße System ist dahingehend ausgebildet, dass es abhängig davon, von welchem Medium es direkt umgeben und kontaktiert ist, erkennt, ob sich ein Ultraschallsensor im Wasser oder in der Luft befinden. Dies erfolgt insbesondere anhand der Auswertung der Empfangssignalverläufe, so dass in diesem Zusammenhang explizit vorgesehen ist, dass die Aussendung in die direkt mit den Sensoren kontaktierten Medien erfolgt und anhand der darin zurückempfangenen Signale, insbesondere eine Wasserumspülung genau detektiert werden kann.

Dabei ist die Steuer- und Auswerteeinheit abhängig von dem Auftreten eines akustischen Kurzschlusses dahingehend ausgebildet, dass sie erkennt, ob sich ein Ultraschallsensor im Wasser oder in der Luft befindet. Zur Erkennung eines akustischen Kurzschlusses sind zwei benachbarte Ultraschallsensoren erforderlich. Das Befinden im Wasser beider Ultraschallsensoren ist dadurch erkennbar, dass ein akustischer Kurzschluss auftritt.

Ein akustischer Kurzschluss ist ein besonders signifikantes Aussagekriterium darüber, ob sich die dann erforderlichen zwei Ultraschallsensoren in Wasser befinden. Denn ein derartiger akustischer Kurzschluss tritt lediglich dann auf, wenn sich diese beiden Ultraschallsensoren beide in Wasser befinden. In diesem Zusammenhang wird unter einem akustischem Kurzschluss eine Situation verstanden, bei der einer der beiden Ultraschallsensoren ein Ultraschallsignal aussendet und der benachbarte zweite Ultraschallsensor dieses quasi hört, da sich das ausgesendete Signal nicht nur in Hauptstrahlrichtung des ersten Sensors, sondern auch über die Komponente, in die beide Ultraschallsensoren eingebaut sind, zu diesem zweiten Ultraschallsensor bewegt bzw. läuft. So ist insbesondere bei dem Verbau dieser beiden Ultraschallsensoren in einem Stoßfänger des Fahrzeugs eine Ausbreitung der Ultraschallwelle über die Luft entlang des Stoßfängers von dem das Signal aussendenden Sensor zum benachbarten zweiten Ultraschallsensor gegeben. Gerade wenn sich diese beiden Sensoren unter Wasser befinden tritt dann der erläuterte akustische Kurzschluss auf.

In einer Ausgestaltung ist die Steuer- und Auswerteeinheit zudem abhängig von einer Ausschwingzeit und/oder der Dauer eines Echos und/oder der Anzahl der Echos dahingehend ausgebildet, dass sie erkennt, ob sich ein Ultraschallsensor im Wasser oder in der Luft befindet.

Besonders vorteilhaft ist der Einsatz von zumindest zwei benachbarten Ultraschallsensoren. Gerade dann ergeben diese spezifisch genannten Parameter sehr präzise Aussagemöglichkeiten darüber, ob sich die Ultraschallsensoren im Wasser oder in der Luft befinden. Gerade im Hinblick auf die Ausschwingzeit ist dies ein besonders repräsentativer Parameter. Unter einer Ausschwingzeit wird in diesem Zusammenhang die Zeitdauer einer Membran des Ultraschallsensors, die durch einen Piezo zum Schwingen angeregt wird, verstanden, die sie benötigt, um nach dem Ende der Anregung durch das Piezoelement wieder auf ein vorgegebenes Schwinglevel zurück zukehren. Insbesondere ist die Membran eine Aluminiummembran.

Auf Grund der Ausgestaltung der Ultraschallsensoren ist diese Ausschwingzeit in Luft und in Wasser signifikant unterschiedlich, so dass anhand dieses Parameters in dem Verlauf der Empfangssignale ein Erkennungskriterium gegeben ist, um entscheiden zu können, ob sich die Sensoren in Wasser oder in der Luft befinden.

Insbesondere müssen sich bei der Verwendung von zumindest zwei Ultraschallsensoren zu dieser Auswertung und Aussagemöglichkeit beide Ultraschallsensoren jeweils sich in dem gleichen Medium befinden.

Auch die Dauer eines Echos gibt eine genaue Aussagemöglichkeit darüber, ob sich der Sensor im Wasser oder in der Luft befindet. Gerade dann, wenn sich ein Ultraschallsensor in Wasser befindet, treten eine Mehrzahl von Echos und somit eine Echozahl > 1 auf, die in Luft nicht gegeben ist. Auch die Echoanzahl gibt dadurch einen signifikanten Aussageparameter zur Beurteilung darüber, in welchem Medium sich ein Ultraschallsensor gegenwärtig befindet. Gerade das Auftreten von weiteren Echos kann beispielsweise durch das Einwirken des Wassers auf die Membran des Sensors erzeugt werden.

Vorzugsweise wird das sich im Wasser befinden eines Ultraschallsensors dadurch erkannt, dass die Ausschwingzeit im Vergleich zur Ausschwingzeit in der Luft größer ist.

Darüber hinaus kann das sich im Wasser befinden eines Ultraschallsensors dadurch erkannt werden, dass die Anzahl der Echos > 1 ist. Insbesondere ist vorgesehen, dass das Befinden in Wasser beider Ultraschallsensoren auch dadurch erkennbar ist, dass bei der indirekten Messung die Dauer des ersten Echos verlängert ist. Unter einer indirekten Messung wird eine derartige verstanden, bei der ein erster Sensor ein Ultraschallsignal aussendet und der benachbarte zweite Ultraschallsensor dieses ausgesendete und reflektierte Signal empfängt. Gerade bei dieser spezifischen Sendeempfangskonzeption, die als indirekte Messung bezeichnet wird, ist die verlängerte Zeitdauer des ersten Echos ein besonderes Charakteristikum um zu erkennen, dass sich die beiden Sensoren im Wasser befinden.

Insbesondere ist es die Kombination aus langer Ausschwingzeit bei direkter Messung, Dauer des ersten Echos bei indirekter Messung und Anzahl der Echos bei direkter Messung und indirekter Messung, die das Erkennen der Überflutung besonders vorteilhaft und präzise gewährleistet.
Vorzugsweise ist auch vorgesehen, dass die Verläufe der Empfangssignale in Luft als Vergleichsverläufe in der Steuer- und Auswerteeinheit abgespeichert sind und zum Vergleich mit den momentan während eines Messzyklus gemessenen Verlauf zu Grund gelegt ist und abhängig von dem Vergleich erkennbar ist, ob sich die Ultraschallsensoren im Wasser befinden. Es wird also hier eine bereits besonders vorbereitete und daher im Hinblick auf die Entscheidungsfindung sehr schnelle Möglichkeit geschaffen. Es kann auch vorgesehen sein, dass Vergleichswerte für die Dauer der Ausschwingzeit bei direkter Messung und/oder die Dauer des ersten Echos bei indirekter Messung und/oder die Anzahl der Echos in der Steuer- und Auswerteeinheit abgespeichert sind.

Da sich üblicherweise die Sensoren in der Luft befinden kann durch diese Ablage der entsprechenden zugeordneten Verläufe der Empfangssignale quasi eine Referenz gebildet werden, die schnell und aussagekräftig als Vergleich zu den momentan gemessenen Empfangssignalen herangezogen werden kann. Tritt demgegenüber gemäß den oben vorteilhaft erläuterten Parametern die entsprechende Abweichung zu diesen Referenzverläufen auf, kann sehr schnell entschieden werden, ob sich die Ultraschallsensoren in Wasser befinden. Dadurch kann auch die Entscheidung des Systems darüber, wenn eine derartige Überflutung auftritt oder aufgetreten ist, welche Maßnahmen im weiteren zu ergreifen sind, sehr schnell und zeitnah zu der Überflutung durchgeführt werden. Vorzugsweise ist abhängig von einem Erkennen, dass die Ultraschallsensoren im Wasser sind, die Aktivierbarkeit von Schutzfunktionen zur Vermeidung eines Wassereintritts in Fahrzeugkomponenten durch die Steuer- und Auswerteeinheit steuerbar. Insbesondere kann vorgesehen sein, Luftkanäle des Fahrzeugs durch Klappen zu schließen. Dadurch kann insbesondere auf Grund einer unerwünscht hohen Wasserstandserkennung, die als Information insbesondere auch auf einem oder mehreren Kommunikationsbussen des Fahrzeugs bereitgestellt werden kann, das Schließen von Luftansaugkanälen erfolgen, um das Ansaugen von Wasser in den Motor zu Vermeiden und/oder in den Fahrzeugantrieb einzugreifen.

Eine derartige Vorgehensweise ist besonders vorteilhaft für Fahrzeug, die auch für den Off-Road-Betrieb vorgesehen sind, und ein gewolltes und bewusstes Befahren dieses Geländes von einem Fahrer erfolgt, wie beispielsweise Geländewägen oder Jeeps oder dergleichen.

Gerade bei derartigen Fahrzeugen, die auch bewusst und gewollt in derartige abwegigen Gelände bewegt werden, in denen derartig hohe Wasserstände auftreten können, die ein zumindest teilweises Überfluten des Fahrzeugs bewirken, kann diese Befahrung sicherer erfolgen.

Vorzugsweise sind die Ultraschallsensoren an einem Stoßfänger des Fahrzeugs angeordnet. Insbesondere ist vorgesehen, dass die Ultraschallsensoren auch einem Parkassistenzsystem des Fahrzeugs funktionell zugeordnet sind und vorzugsweise Informationen über die Fahrzeugumgebung bei einem zumindest semi-autonomen Parkvorgang des Fahrzeugs geliefert werden. Dies ist eine besonders vorteilhafte Ausgestaltung, da dadurch Ultraschallsensoren multifunktionell für unterschiedliche Fahrerassistenzsysteme zur Verfügung stehen und unterschiedliche Informationen jeweils liefern können. Dadurch kann auch eine sehr bauteilreduzierte und hochfunktionelle Ausgestaltung ermöglicht werden.

Vorzugsweise ist zumindest ein zusätzlicher Wasserstandserkennungssensor bei dem Überflutungserkennungssystem vorgesehen, wobei dieser zusätzliche Wasserstandserkennungssensor als Schwimmerschalter oder Drucksensor ausgebildet ist und somit funktionell und bautechnisch unterschiedlich zum Ultraschallsensor ausgebildet ist. Vorzugsweise ist dieser zusätzliche Wasserstandserkennungssensor in vertikaler Richtung des Fahrzeugs betrachtet unter den Ultraschallsensoren angeordnet. Er ist somit bodennäher positioniert als die Ultraschallsensoren. Durch diese zusätzliche Wasserstandserkennungssensorik kann ermöglicht werden, dass auch bereits vor dem überfluten der Ultraschallsensoren Informationen über einen relativ hohen Wasserstand unter dem Fahrzeug generiert und mitgeteilt wird. Gegebenenfalls können durch diese zusätzlichen Informationen bereits schutzfunktionell gesehen vorbeugende Maßnahmen eingeleitet werden oder entsprechende Schutzsysteme bereits in einen teilaktivierten Modus versetzt werden. Steigt der Wasserstand dann weiter und überflutet die Ultraschallsensoren, so kann diesbezüglich dann noch schneller reagiert werden, um die Schutzfunktionen durchzuführen oder die Schutzkomponenten zu aktivieren oder in ihre Endstellung zu bringen.

Eine besonders vorteilhafte Vorgehensweise ist die Verwendung eines in einem Fahrzeug vorhandenen Parkassistenzsystems als Überflutungserkennungssystem. Parkassistenzsysteme mit Ultraschallsensoren sind in diesem Zusammenhang bekannt. Es ist jedoch darüber hinaus durch diese Verwendung eine ganz spezifische Ausgestaltung vorgesehen, so dass das Parkassistenzsystem neben seiner grundständigen Funktionalität, nämlich dem unterstützenden Einparken und/oder Ausparken, auch eine zusätzliche weitere ganz andere Funktionalität, nämlich die Überflutungserkennung gewährleistet. Es können somit auch herkömmliche Parkassistenzsysteme multifunktionell verwendet werden und es müssen insbesondere im Hinblick auf die Sensorik keine zusätzlichen Sensoren verwendet werden. Die vom Parkassistenzsystem bereitgestellten Ultraschallsensoren können auch für das Überflutungserkennungssystem verwendet werden.

Vorteilhafte Ausführungen des erfindungsgemäßen Überflutungserkennungssystems sind als vorteilhafte Ausführungen der Verwendung anzusehen.

Bei einem erfindungsgemäßen Verfahren zum Erkennen einer Überflutung eines Fahrzeugs, wird mit zumindest einem Ultraschallsensor ein Abstand von Objekten in Längsrichtung und/oder Querrichtung des Fahrzeugs erfasst und in im zumindest teilweise überfluteten Zustand des Ultraschallsensors werden Informationen über ein zumindest teilweises Überflutet sein des Fahrzeugs mit diesem Ultraschallsensor erfasst.

Vorzugsweise wird mit einem ersten Ultraschallsensor und zumindest mit einem zweiten Ultraschallsensor die Möglichkeit geschaffen, Ultraschallsignale auszusenden und zu empfangen. Die empfangenen Signale werden mit einer Steuer- und Auswerteeinheit im Hinblick auf ein Überflutet sein der Ultraschallsensoren ausgewertet. Die Verläufe der Empfangssignale der Ultraschallsensoren sind in unterschiedlichen Medien verschieden und durch die Steuer- und Auswerteeinheit wird abhängig von einem empfangenen und ausgewerteten Signalverlauf erkannt, ob sich die Ultraschallsensoren im Wasser oder in der Luft befinden.

Vorteilhafte Ausführungen des erfindungsgemäßen Überflutungserkennungssystems sind als vorteilhafte Ausführungen des erfindungsgemäßen Verfahrens anzusehen.

Die Erfindung betrifft auch ein Fahrzeug mit einem Überflutungserkennungssystem gemäß der Erfindung oder einer vorteilhaften Ausgestaltung davon, wobei das Fahrzeug auch insbesondere ein Parkassistenzsystem aufweist, wobei zumindest ein Ultraschallsensor des Überflutungserkennungssystem funktionell auch dem Parkassistenzsystem zugeordnet ist.

Vorteilhafte Ausführungen des erfindungsgemäßen Überflutungserkennungssystems sind als vorteilhafte Ausführungen des erfindungsgemäßen Fahrzeugs anzusehen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine schematische Draufsicht auf ein Fahrzeug mit einem Ausführungsbeispiel eines erfindungsgemäßen Überflutungserkennungssystems;
- Fig. 2: eine schematische Seitenansicht des Fahrzeugs mit teilweise überfluteten Komponenten;
- Fig. 3: ein Empfangssignalverlauf in Luft bei direkter Messung ohne ein Hindernis während eines Messzyklus;
- Fig. 4: ein Empfangssignalverlauf in Luft bei indirekter Messung ohne ein Hindernis während eines Messzyklus;
- Fig. 5: ein Empfangssignalverlauf in Wasser bei direkter Messung während eines Messzyklus;
- Fig. 6: ein Empfangssignalverlauf in Wasser bei indirekter Messung während eines Messzyklus.

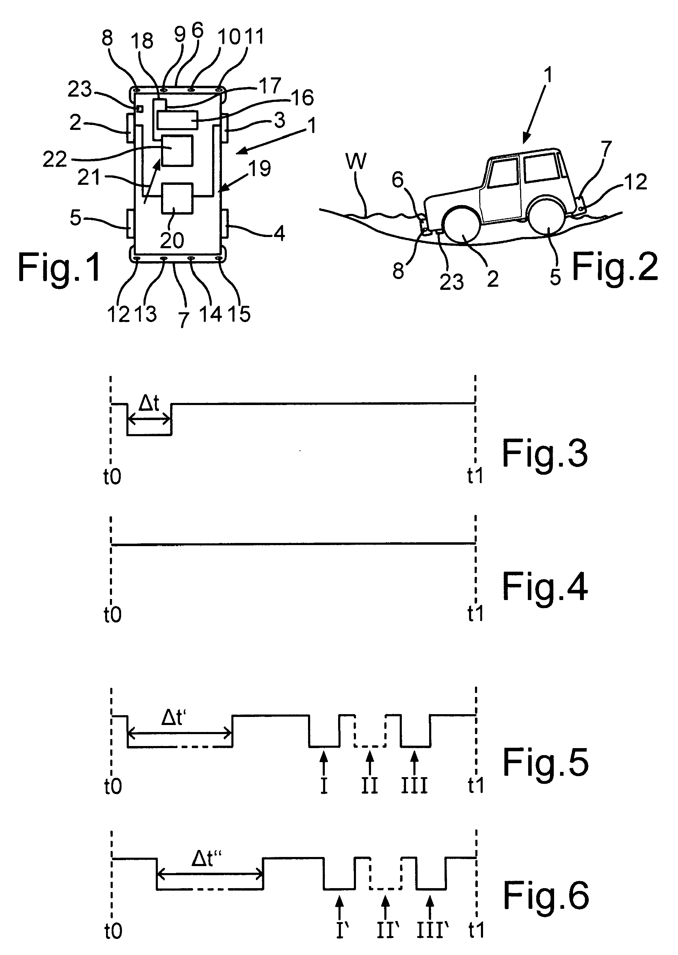

In Fig. 1 ist in einer schematischen Draufsichtdarstellung ein Fahrzeug 1 gezeigt, welches mit zwei Achsen und zweispurig ausgebildet ist. Das Fahrzeug 1 umfasst vier Räder 2, 3, 4 und 5. Im Ausführungsbeispiel sind die vorderen Räder 2 und 3 lenkbare Räder. Das Fahrzeug 1 umfasst an der Vorderseite einen vorderen Stoßfänger 6 und an der Rückseite einen hinteren Stoßfänger 7. An dem vorderen Stoßfänger 6 sind im Ausführungsbeispiel vier Ultraschallsensoren 8, 9, 10 und 11 angeordnet, die zur Umfelderfassung im Vorfeld des Fahrzeugs ausgebildet sind. In analoger Weise sind im hinteren Stoßfänger 7 Ultraschallsensoren 12, 13, 14 und 15 ausgebildet. Die Anzahl der Ultraschallsensoren im Stoßfänger 6 und im Stoßfänger 7 kann auch unterschiedlich zur dargestellten Ausführung sein. Mit den hinteren Ultraschallsensoren 12 bis 15 wird der Umgebungsbereich hinter dem Fahrzeug 1 umfasst. Mit den Ultraschallsensoren 8, 11, 12 und 15 kann auch der seitliche Bereich des Fahrzeugs 1 detektiert werden.

Das Fahrzeug 1 umfasst darüber hinaus einen Motor 16 mit zumindest einem Luftansaugkanal 17, in dem eine Klappe 18 zum zumindest teilweisen Verschließen des Luftansaugkanals 17 angeordnet ist.

Das Fahrzeug 1 umfasst ein Parkassistenzsystem 19, welches die Ultraschallsensoren 8 bis 11 und 12 bis 15 aufweist und darüber hinaus eine Steuereinheit 20 umfasst. Abhängig von den detektierten Umgebungsinformationen ist das Parkassistenzsystem 19 zur Erkennung einer geeigneten Parklücke und vorzugsweise auch zum zumindest semi-autonomen Durchführen eines Parkvorgangs für das Fahrzeug 1 ausgebildet. In diesem Zusammenhang wird über die Steuereinheit 20 auf Aktuatoren der lenkbaren Räder 2 und 3 eingewirkt.

Darüber hinaus umfasst das Fahrzeug 1 ein Überflutungserkennungssystem 21, welches zur Detektion von einem zumindest teilweise sich unter Wasser befindenden Fahrzeugs 1 ausgebildet ist. Das Überflutungserkennungssystem 21 umfasst eine Steuereinheit 22. Darüber hinaus sind zumindest zwei der Ultraschallsensoren 8 bis 11 und/oder zumindest zwei der Ultraschallsensoren 12 bis 15 funktionell dem Überflutungserkennungssystem 21 zugeordnet. Insbesondere sind zumindest zwei benachbarte Ultraschallsensoren 8 bis 11 und/oder zumindest zwei benachbarte Ultraschallsensoren 12 bis 15 funktionell dem Überflutungserkennungssystem 21 zugeordnet. Dies bedeutet, dass zumindest zwei benachbarte Ultraschallsensoren 8 bis 15 multifunktionell ausgebildet sind und zumindest zwei unterschiedlichen Assistenzsystemen des Fahrzeugs 1 zugeordnet sind.

Insbesondere ist somit vorgesehen, dass ein beispielsweise ohnehin im Fahrzeug verbautes Parkassistenzsystem 19 zusätzlich auch als Überflutungserkennungssystem verwendet wird. Dazu kann auch vorgesehen sein, dass lediglich eine Steuereinheit 20 oder 22 vorhanden ist.

Das Überflutungserkennungssystem 21 ist dahingehend ausgebildet, dass es abhängig von Verläufen von Empfangssignalen während zumindest eines Messzyklus anhand von spezifischen Charakteristika in diesen Signalverläufen erkennt, ob sich die dem Überflutungserkennungssystem 21 zugeordneten Ultraschallsensoren 8 bis 15 im Wasser oder in der Luft befinden. Zur Erkennung einer Überflutung mit Wasser müssen die Ultraschallsensoren 8 bis 15, die dem Überflutungserkennungssystem 21 zugeordnet sind, im Wesentlichen vollständig unter Wasser sein.

In diesem Zusammenhang wird abhängig von spezifischen Parametern, insbesondere der Ausschwingzeit und/oder der Anzahl der Echos und/oder der Echoverläufe und/oder einem Auftreten eines akustischen Kurzschlusses erkannt, ob sich diese Ultraschallsensoren 8 bis 15 unter Wasser befinden oder nicht.

Es sei an dieser Stelle angemerkt, dass lediglich zwei benachbarte Ultraschallsensoren 8 bis 15 gegebenenfalls unter Wasser sein müssen, um ein Überfluten detektieren zu können.

In Fig. 2 ist in einer schematischen Seitenansicht das Fahrzeug 1 gezeigt, welches sich mit seinem vorderen Stoßfänger 6 und somit auch die Ultraschallsensoren 8 bis 11 vollständig unter Wasser befinden. Der Wasserstand W überspült somit den vorderen Stoßfänger 6 und somit auch die Ultraschallsensoren 8 bis 11.

Vorzugsweise ist vorgesehen, dass Empfangssignalverläufe von ausgesendeten Ultraschallsignalen sowohl einer direkten als auch einer indirekten Messung in dem Steuergerät 22 abgespeichert sind. Zusätzlich und anstatt dazu kann auch vorgesehen sein, dass neben dieser Signalverläufe in der Luft auch die Signalverläufe der Empfangssignale im Wasser sowohl einer direkten als auch einer indirekten Messung gespeichert sind. Diese Referenzverläufe können dann im Vergleich mit den jeweils gegenwärtig und momentan empfangenen Signalverläufen der Empfangssignale verglichen werden und abhängig davon einfach und sicher erkannt werden, ob sich zwei benachbarte Ultraschallsensoren 8 bis 15 unter Wasser befinden oder in der Luft befinden. Alternativ kann auch vorgesehen sein, dass Vergleichswerte für die dauer der Ausschwingzeit bei direkter Messung und/oder die Dauer des ersten Echos bei indirekter Messung und/oder die Anzahl der Echos in dem Steuergerät 22 abgespeichert sind.

Da zumindest diejenigen Ultraschallsensoren 8 bis 15, die dem Überflutungserkennungssystem 21 zugeordnet sind, deutlich unterschiedliche Empfangssignalverläufe in Luft und im Wasser aufweisen, kann diesbezüglich auch eine sehr präzise und dennoch einfache und aufwandsarm zu generierende Entscheidungsbasis für das Erkennen einer Überflutung geliefert werden.

Insbesondere ist dann auch vorgesehen, dass bei einer Situation, wie sie beispielsweise in Fig. 2 gezeigt ist, bei der eine Überflutung des Frontbereichs des Fahrzeugs 1 erkannt wird, beispielsweise die Klappe 18 automatisch geschlossen wird, so dass über den Luftkanal 17 kein Wasser in den Motor 16 angesaugt werden kann. Darüber hinaus kann durch weitere Schutzfunktionen vermieden werden, dass auch an anderen unerwünschten Stellen ein Wassereintritt auftritt.

Darüber hinaus umfasst das Fahrzeug 1 gemäß der Darstellung in Fig. 1 und Fig. 2 zumindest einen weiteren Wasserstandssensor 23, welcher in vertikaler Richtung des Fahrzeugs betrachtet weiter unten als die Ultraschallsensoren 8 bis 15 und somit bodennäher angeordnet ist. Der zumindest eine zusätzliche Wasserstandsensor 23 kann beispielsweise ein Schwimmerschalter oder ein Drucksensor sein. Dieser kann zusätzlich zur Informationsgeneration über ein Überflutetsein beitragen. Insbesondere könnten diesbezüglich auch Aussagen relativ früh generiert werden, bevor ein Überfluten der im Hinblick auf das Parkassistenzsystem 19 an den spezifischen Positionen angeordneten Ultraschallsensoren 8 bis 15 auftritt. Gerade bei einer multifunktionell vorgesehenen Verwendung des Parkassistenzsystems 19, welches die spezifische Positionierung der Ultraschallsensoren 8 bis 15 auch im Hinblick auf ihre Abstrahl- und Empfangscharakteristik lediglich an spezifischen Orten angeordnet sein können und diese zusätzlich dem Überflutungserkennungssystem 21 zugeordnet sind, kann die zusätzliche Verwendung zumindest eines weiteren Wasserstandssensors 23, der tiefer liegend angeordnet ist, vorteilhaft sein.

Wird beispielsweise ausgehend von der Darstellung in Fig. 1, bei dem sich das Fahrzeug 1 vollständig über Wasser und somit in Luft befindet, beispielhaft ein Messzyklus in Fig. 3 zwischen den Zeitpunkten t₀ und t₁ gezeigt. In diesem Fall ist der Empfangssignalverlauf gemäß einer direkten Messung gezeigt, wobei unter einer direkten Messung eine derartige verstanden wird, bei der ein Ultraschallsensor 8 bis 15 ein Ultraschallsignal aussendet und dieser gleiche Sensor 8 bis 15 auch das Empfangssignal empfängt. Diesbezüglich ist zu erkennen, dass in dem Empfangssignalverlauf eine Ausschwingzeit zu erkennen ist, welche sich über eine Zeitdauer Δ *t* erstreckt. Die Ausschwingzeit ist dabei diejenige Zeit, die benötigt wird, um eine Membran, insbesondere eine Aluminiummembran, eines aussendenden Ultraschallsensors 8 bis 15 nach Beenden der Schwinganregung durch ein Piezoelement wieder auf ein vorgebbares Schwinglevel zurückzuführen. Dieser Empfangssignalverlauf für die direkte Messung ohne Hindernis ist somit charakteristisch in Luft. In Fig. 4 ist ein Messzyklus zwischen den Zeitpunkten t₀ und t₁ gezeigt, welcher eine indirekte Messung darstellt. Dies bedeutet, dass von einem Ultraschallsensor, beispielsweise dem Ultraschallsensor 8 ein Ultraschallsignal ausgesendet wird und von dem benachbarten Ultraschallsensor 9 ein möglicher Empfang beobachtet wird, wobei in diesem Zusammenhang in Luft ohne Hindernis gemäß dem Empfangssignalverlauf in Fig. 4 eben gerade kein derartiges Signal detektiert wird. Auch dieser Signalverlauf für die indirekte Messung ist in Luft charakteristisch.

In Fig. 5 ist ein weiterer Messzyklus gezeigt, bei dem sich zwei benachbarte Ultraschallsensoren gemäß der Darstellung in Fig. 2 unter Wasser befinden. In Fig. 5 ist dazu wiederum ein charakteristischer Signalverlauf eines Empfangssignals bei direkter Messung gezeigt. Es ist zu erkennen, dass die Ausschwingzeit Δ *t*' unter Wasser wesentlich größer ist als in Luft ist, wie es in Fig. 3 gezeigt ist. Allein schon dieses Charakteristikum der Ausschwingzeit ermöglicht somit in den Signalverläufen der Empfangssignale eine sehr präzise Entscheidungsmöglichkeit darüber, wo sich der beobachtete Sensor gerade befindet.

Darüber hinaus wird bei einem unter Wasser sein des Ultraschallsensors, dessen Empfangssignalverlauf dahingehend charakteristisch beobachtet, ob weitere Echos I, II und III auftreten, was sich in entsprechenden Signalflanken gemäß der Darstellung in Fig. 5 zeigt. Auch derartige zusätzliche Echos sind im Vergleich dazu im Empfangssignalverlauf in Luft (Fig. 3) nicht gegeben.

In Fig. 6 ist ebenfalls ein Messzyklus zwischen den Zeitpunkten t₀ und t₁ bei wiederum indirekter Messung in Wasser gezeigt. Es kann hier erkannt werden, dass beispielsweise bei einem Aussenden eines Ultraschallsignals von dem Ultraschallsensor 8 in Wasser der benachbarte Ultraschallsensor 9 einen Empfangssignalverlauf gemäß der Darstellung in Fig. 6 aufweisen kann. Diesbezüglich ist hier die Zeitdauer des ersten Echos Δ *t*" wesentlich größer. Darüber hinaus treten auch hier wiederum weitere Echos I', II' und III' in dem Empfangssignalverlauf auf.

Diese beispielhaften Signalverläufe der Empfangssignale zeigen somit deutliche Charakteristika, die ein Erkennen, ob sich bestimmte Ultraschallsensoren, die im Hinblick auf diese Empfangssignalauswertung beobachtet werden, in Wasser oder in Luft befinden. Diese vier Empfangssignalverläufe können vorzugsweise als Referenz in der Steuereinheit abgespeichert werden und dann mit den momentan gemessenen Empfangssignalverläufen verglichen werden.

Für die Messungen unter Wasser ist somit charakteristisch, dass die Dauer des ersten Echos direkt und indirekt gemessen extrem verlängert sind und weitere Echos detektiert werden.

## Patentansprüche

1. Überflutungserkennungssystem für ein Fahrzeug (1) mit zumindest zwei Ultraschallsensoren (8 bis 15), wobei der jeweilige Ultraschallsensor (8 bis 15) zur Erfassung eines Abstands von Objekten in Längsrichtung und/oder Querrichtung des Fahrzeugs ausgebildet ist und in im zumindest teilweise überfluteten Zustand zur Überflutungserkennung ausgebildet ist, wobei eine Steuer- und Auswerteeinheit (20, 22) ausgebildet ist, welche zur Auswertung der Signale des jeweiligen Ultraschallsensors (8 bis 15) im Hinblick auf dessen Überflutet sein ausgebildet ist, und der Verlauf der Empfangsignale des jeweiligen Ultraschallsensors (8 bis 15) in unterschiedlichen Medien verschieden sind, wobei die Streuer- und Auswerteeinheit (20, 22) abhängig von einem empfangenen und ausgewerteten Signalverlauf erkennt, ob sich der jeweilige Ultraschallsensor (8 bis 15) im Wasser oder in Luft befindet, **dadurch gekennzeichnet, dass** die Steuer- und Auswerteeinheit (8 bis 15) abhängig von dem Auftreten eines akustischen Kurzschlusses zweier benachbarter Ultraschallsensoren (8 bis 15) erkennt, ob sich die zwei benachbarten Ultraschallsensoren (8 bis 15) im Wasser oder in Luft befinden.

2. Überflutungserkennungssystem nach Anspruch 1, **dadurch gekennzeichnet, dass** zumindest einer der Ultraschallsensoren (8 bis 15) eine Hauptabstrahlrichtung der ausgesendeten Signale in horizontaler Richtung aufweist.

3. Überflutungserkennungssystem nach Anspruch 1 oder 2,
**dadurch gekennzeichnet, dass**
die Steuer- und Auswerteeinheit (8 bis 15) abhängig von einer Ausschwingzeit des Signalverlaufs und/oder der Dauer eines Echos und/oder der Anzahl der Echos erkennt, ob sich der jeweilige Ultraschallsensor (8 bis 15) im Wasser oder in Luft befindet.

4. Überflutungserkennungssystem nach Anspruch 3,
**dadurch gekennzeichnet, dass**
das Befinden im Wasser des jeweiligen Ultraschallsensors (8 bis 15) dadurch erkennbar ist, dass die Ausschwingzeit im Vergleich zur Ausschwingzeit in Luft größer ist.

5. Überflutungserkennungssystem nach Anspruch 3 oder 4,
**dadurch gekennzeichnet, dass**
das Befinden im Wasser des jeweiligen Ultraschallsensors (8 bis 15) dadurch erkennbar ist,
dass die Anzahl der Echos größer 1 ist.

6. Überflutungserkennungssystem nach einem der Ansprüche 3 bis5,
**dadurch gekennzeichnet, dass**
das Befinden im Wasser beider Ultraschallsensoren (8 bis 15) dadurch erkennbar ist, dass bei indirekter Messung die Dauer des ersten Echos verlängert ist.

7. Überflutungserkennungssystem nach einem der vorhergehenden Ansprüche 1 bis 6,
**dadurch gekennzeichnet, dass**
die Verläufe der Empfangssignale in Luft und/oder in Wasser als Vergleichsverläufe in der Steuer- und Auswerteeinheit (20, 22) abgespeichert sind und zum Vergleich mit den momentan während eines Messzyklus gemessenen Verlauf zu Grunde gelegt sind und abhängig von dem Vergleich erkennbar ist, ob sich ein Ultraschallsensor (8 bis 15) im Wasser befindet oder Vergleichswerte für die Dauer einer Ausschwingzeit bei direkter Messung und/oder die Dauer eines ersten Echos bei indirekter Messung und/oder die Anzahl der Echos in der Steuer- und Auswerteeinheit (20, 22) abgespeichert sind und zum Vergleich mit den momentan während eines Messzyklus gemessenen Verlauf zu Grunde gelegt sind und abhängig von dem Vergleich erkennbar ist, ob sich ein Ultraschallsensor (8 bis 15) im Wasser befindet.

8. Überflutungserkennungssystem nach einem der vorhergehenden Ansprüche 1 bis 7,
**dadurch gekennzeichnet, dass**
die Steuer- und Auswerteeinheit (20, 22) derart ausgebildet ist, dass für die Auswertung der Empfangssignale der Ultraschallsensoren (8 bis 15) zur Erkennung des Befindens der Sensoren (8 bis 15) in Wasser oder in Luft die bei einer direkten Messung und/oder die bei einer indirekten Messung erhaltenen Signale zumindest eines Messzyklus berücksichtigt sind.

9. Überflutungserkennungssystem nach einem der vorhergehenden Ansprüche,
**dadurch gekennzeichnet, dass**
abhängig von einem Erkennen, dass zumindest einer der Ultraschallsensoren (8 bis 15) im Wasser ist, Schutzfunktionen zur Vermeidung eines Wassereintritts in Fahrzeugkomponenten (16, 17) durch die Steuer- und Auswerteeinheit (20, 22) aktivierbar sind, insbesondere ein Luftkanal (16) des Fahrzeugs (1) durch eine Klappe (18) schließbar ist.

10. Überflutungserkennungssystem nach einem der vorhergehenden Ansprüche, **dadurch gekennzeichnet, dass**
zumindest einer der Ultraschallsensoren (8 bis 15) an einem Stoßfänger (6, 7) des Fahrzeugs (1) angeordnet sind.

11. Überflutungserkennungssystem nach einem der vorhergehenden Ansprüche, **dadurch gekennzeichnet, dass**
zumindest einer der Ultraschallsensoren (8 bis 15) auch einem Parkassistenzsystem (19) des Fahrzeugs (1) funktionell zugeordnet ist.

12. Überflutungserkennungssystem nach einem der vorhergehenden Ansprüche, **dadurch gekennzeichnet, dass**
zumindest ein zusätzlicher Wasserstandserkennungssensor (23) vorgesehen ist, welcher als Schwimmerschalter oder Drucksensor ausgebildet ist, und vorzugsweise vorgesehen ist, dass dieser in vertikaler Richtung des Fahrzeugs (1) betrachtet auf niedrigerem Niveau als die Ultraschallsensoren (8 bis 15) angeordnet ist.

13. Fahrzeug mit einem Überflutungserkennungssystem (21) nach einem der vorhergehenden Ansprüche, wobei das Fahrzeug (1) insbesondere ein Parkassistenzsystem (19) aufweist, und zumindest einer der Ultraschallsensoren (8 bis 15) des Überflutungserkennungssystems (21) funktionell auch dem Parkassistenzsystem (19) zugeordnet ist.

## Claims

1. Flooding detection system for a vehicle (1), having at least two ultrasonic sensors (8 to 15), the respective ultrasonic sensor (8 to 15) being designed to sense a distance from objects in the longitudinal direction and/or transverse direction of the vehicle and being designed to detect flooding in the at least partially flooded state,
a control and evaluation unit (20, 22) being designed, which is designed to evaluate the signals from the respective ultrasonic sensor (8 to 15) with regard to its flooded state, and the profile of the reception signals of the respective ultrasonic sensor (8 to 15) being different in different media, the control and evaluation unit (20, 22) detecting, on the basis of a received and evaluated signal profile, whether the respective ultrasonic sensor (8 to 15) is in water or in air, **characterized in that**
the control and evaluation unit (8 to 15) detects, on the basis of the occurrence of an acoustic short circuit of two adjacent ultrasonic sensors (8 to 15), whether the two adjacent ultrasonic sensors (8 to 15) are in water or in air.

2. Flooding detection system according to Claim 1, **characterized in that**
at least one of the ultrasonic sensors (8 to 15) has a main radiation direction of the emitted signals in the horizontal direction.

3. Flooding detection system according to Claim 1 or 2,
**characterized in that**
the control and evaluation unit (8 to 15) detects, on the basis of a decay time of the signal profile and/or the duration of an echo and/or the number of echoes, whether the respective ultrasonic sensor (8 to 15) is in water or in air.

4. Flooding detection system according to Claim 3, **characterized in that**
it is possible to detect that the respective ultrasonic sensor (8 to 15) is in water by virtue of the decay time being greater than the decay time in air.

5. Flooding detection system according to Claim 3 or 4,
**characterized in that**
it is possible to detect that the respective ultrasonic sensor (8 to 15) is in water by virtue of the number of echoes being greater than 1.

6. Flooding detection system according to one of Claims 3 to 5,
**characterized in that**
it is possible to detect that both ultrasonic sensors (8 to 15) are in water by virtue of the duration of the first echo being extended in the case of an indirect measurement.

7. Flooding detection system according to one of the preceding Claims 1 to 6,
**characterized in that**
the profiles of the reception signals in air and/or in water are stored as comparison profiles in the control and evaluation unit (20, 22) and are used as a basis for the comparison with the profile currently measured during a measurement cycle, and it is possible to detect, on the basis of the comparison, whether an ultrasonic sensor (8 to 15) is in water, or comparison values for the duration of a decay time in the case of a direct measurement and/or the duration of a first echo in the case of an indirect measurement and/or the number of echoes are stored in the control and evaluation unit (20, 22) and are used as a basis for the comparison with the profile currently measured during a measurement cycle, and it is possible to detect, on the basis of the comparison, whether an ultrasonic sensor (8 to 15) is in water.

8. Flooding detection system according to one of the preceding Claims 1 to 7,
**characterized in that**
the control and evaluation unit (20, 22) is designed in such a manner that the signals from at least one measurement cycle which are obtained during a direct measurement and/or during an indirect measurement are taken into account for evaluating the reception signals of the ultrasonic sensors (8 to 15) in order to detect whether the sensors (8 to 15) are in water or in air.

9. Flooding detection system according to one of the preceding claims,
**characterized in that**
on the basis of a detection that at least one of the ultrasonic sensors (8 to 15) is in water, protective functions for avoiding water ingress into vehicle components (16, 17) can be activated by the control and evaluation unit (20, 22), in particular an air duct (16) of the vehicle (1) can be closed by means of a valve (18).

10. Flooding detection system according to one of the preceding claims,
**characterized in that**
at least one of the ultrasonic sensors (8 to 15) is arranged on a bumper (6, 7) of the vehicle (1).

11. Flooding detection system according to one of the preceding claims,
**characterized in that**
at least one of the ultrasonic sensors (8 to 15) is also functionally assigned to a parking assistance system (19) of the vehicle (1).

12. Flooding detection system according to one of the preceding claims, **characterized in that**
at least one additional water level detection sensor (23) is provided and is in the form of a floating switch or a pressure sensor, and provision is preferably made for said sensor to be arranged at a lower level than the ultrasonic sensors (8 to 15) when viewed in the vertical direction of the vehicle (1).

13. Vehicle having a flooding detection system (21) according to one of the preceding claims, the vehicle (1) having a parking assistance system (19), in particular, and at least one of the ultrasonic sensors (8 to 15) of the flooding detection system (21) also being functionally assigned to the parking assistance system (19).

## Revendications

1. Système de reconnaissance de submersion pour un véhicule (1), comportant au moins deux capteurs à ultrasons (8 à 15), dans lequel le capteur à ultrasons respectif (8 à 15) est conçu pour détecter une distance d'objets dans la direction longitudinale et/ou la direction transversale du véhicule et est conçu pour reconnaître une submersion dans un état au moins partiellement submergé,
dans lequel il est conçu une unité de commande et d'évaluation (20, 22) qui est conçue pour évaluer les signaux du capteur à ultrasons (8 à 15) respectif relativement à la submersion de ce dernier, et les profils des signaux de réception du capteur à ultrasons (8 à 15) respectif sont différents dans des milieux différents, dans lequel l'unité de commande et d'évaluation (20, 22) reconnaît, en fonction d'un profil de signal reçu et évalué, si le capteur à ultrasons (8 à 15) respectif est présent dans de l'eau ou dans de l'air,
**caractérisé en ce que** l'unité de commande et d'évaluation (8 à 15) reconnaît, en fonction de la survenue d'un court-circuit acoustique entre deux capteurs à ultrasons (8 à 15) voisins, si les deux capteurs à ultrasons (8 à 15) voisins sont présents dans de l'eau ou dans de l'air.

2. Système de reconnaissance de submersion selon la revendication 1,
**caractérisé en ce qu'**au moins l'un des capteurs à ultrasons (8 à 15) présente une direction d'émission principale des signaux émis dans la direction horizontale.

3. Système de reconnaissance de submersion selon la revendication 1 ou 2,
**caractérisé en ce que** l'unité de commande et d'évaluation (8 à 15) reconnaît, en fonction d'un temps d'amortissement du profil de signal et/ou de la durée d'un écho et/ou du nombre d'échos, si le capteur à ultrasons (8 à 15) respectif est présent dans de l'eau ou dans de l'air.

4. Système de reconnaissance de submersion selon la revendication 3,
**caractérisé en ce que** la présence dans de l'eau du capteur à ultrasons (8 à 15) respectif peut être reconnue par le fait que le temps d'amortissement est plus long par comparaison au temps d'amortissement dans de l'air.

5. Système de reconnaissance de submersion selon la revendication 3 ou 4,
**caractérisé en ce que** la présence dans de l'eau du capteur à ultrasons (8 à 15) respectif peut être reconnue par le fait que le nombre d'échos est supérieur à 1.

6. Système de reconnaissance de submersion selon l'une quelconque des revendications 3 à 5,
**caractérisé en ce que** la présence dans de l'eau des deux capteurs à ultrasons (8 à 15) peut être reconnue par le fait que la durée du premier écho est prolongée lors d'une mesure indirecte.

7. Système de reconnaissance de submersion selon l'une quelconque des revendications 1 à 6 précédentes, **caractérisé en ce que** les profils des signaux de réception dans de l'air et/ou dans de l'eau sont stockés dans l'unité de commande et d'évaluation (20, 22) en tant que profils de comparaison et sont utilisés à des fins de comparaison avec le profil instantané mesuré pendant un cycle de mesure et **en ce qu'**il est possible de reconnaître en fonction de la comparaison si un capteur à ultrasons (8 à 15) est présent dans de l'eau, ou **en ce que** des valeurs de comparaison pour la durée d'un temps d'amortissement lors d'une mesure directe et/ou la durée d'un premier écho lors d'une mesure indirecte et/ou le nombre d'échos, sont stockées dans l'unité de commande et d'évaluation (20, 22) et sont utilisées à des fins de comparaison avec le profil instantané mesuré pendant le cycle de mesure et **en ce qu'**il est possible de reconnaître en fonction de la comparaison si un capteur à ultrasons (8 à 15) est présent dans de l'eau.

8. Système de reconnaissance de submersion selon l'une quelconque des revendications 1 à 7 précédentes, **caractérisé en ce que** l'unité de commande et d'évaluation (20, 22) est conçue de manière à ce que les signaux d'au moins un cycle de mesure obtenus lors d'une mesure directe et/ou lors d'une mesure indirecte sont pris en compte pour l'évaluation des signaux de réception des capteurs à ultrasons (8 à 15) afin de reconnaître la présence des capteurs (8 à 15) dans de l'eau ou dans de l'air.

9. Système de reconnaissance de submersion selon l'une quelconque des revendications précédentes, **caractérisé en ce que** des fonctions de protection destinées à réduire une pénétration d'eau dans des composants de véhicule (16, 17) peuvent être activées, et plus particulièrement, **en ce qu'**un conduit d'air (16) du véhicule (1) peut être fermé par un clapet (18) en fonction d'une reconnaissance du fait qu'au moins l'un des capteurs à ultrasons (8 à 15) est dans de l'eau, par l'intermédiaire de l'unité de commande et d'évaluation (20, 22).

10. Système de reconnaissance de submersion selon l'une quelconque des revendications précédentes, **caractérisé en ce qu'**au moins l'un des capteurs à ultrasons (8 à 15) est/sont disposé(s) sur un parechocs (6, 7) du véhicule (1).

11. Système de reconnaissance de submersion selon l'une quelconque des revendications précédentes, **caractérisé en ce qu'**au moins l'un des capteurs à ultrasons (8 à 15) est/sont associé(s) fonctionnellement à un système d'aide au stationnement (19) du véhicule (1).

12. Système de reconnaissance de submersion selon l'une quelconque des revendications précédentes, **caractérisé en ce qu'**il est prévu au moins un capteur de reconnaissance de niveau d'eau (23) supplémentaire qui est réalisé sous la forme d'un interrupteur à flotteur ou d'un capteur de pression, et **en ce qu'**il est en outre de préférence fait en sorte que celui-ci soit disposé à un niveau inférieur à celui des capteurs à ultrasons (8 à 15) lorsqu'on l'observe dans la direction verticale du véhicule (1).

13. Véhicule muni d'un système de reconnaissance de submersion (21) selon l'une quelconque des revendications précédentes, dans lequel le véhicule (1) comprend notamment un système d'aide au stationnement (19) et en ce qu'au moins l'un des capteurs à ultrasons (8 à 15) du système de reconnaissance de submersion (21) est également associé fonctionnellement au système d'aide au stationnement (19).
